# EUROPEAN PATENT APPLICATION

(11) **EP 4 287 783 A1**
(43) Date of publication of application: **06.12.2023**
(21) Application number: 22745895.7
(22) Date of filing: 26.01.2022
(51) Int. Cl.: H05F 3/02, F16J 15/3232, F16J 15/324, F16J 15/3244, F16J 15/3252

(54) **SEALING DEVICE**

(30) Priority: 27.01.2021 JP 2021011531
(71) Applicant: NOK Corporation, Tokyo 105-8585 (JP)
(72) Inventor: YOSHIMURA, Kenichi, Fukushima-shi, Fukushima 960-1193 (JP)
(74) Representative: Global IP Europe Patentanwaltskanzlei
(86) International application number: PCT/JP2022/002760
(87) International publication number: WO 2022/163675

(57) **Abstract**

Provided is a sealing device that can prevent deterioration caused by heat generation. The sealing device 1 includes a retaining ring 10 made of metal and annular around an axis, a seal lip 20 annular around the axis, and an electroconductive lip 30 having electroconductivity and annular around the axis. The seal lip 20 is fixed, on an outer peripheral side, to the retaining ring 10. The seal lip 20 includes a seal portion 21 extending obliquely relative to the axis, forming an end portion on an inner peripheral side, and including a first inner peripheral surface 22 on an inner peripheral side. The first inner peripheral surface 22 contacts with an inner-peripheral-side member. The electroconductive lip 30 is fixed, on an outer peripheral side, to the retaining ring 10. The electroconductive lip 30 includes a contact point portion 31 extending obliquely relative to the axis, forming an end portion on an inner peripheral side, and including a second inner peripheral surface 32 on an inner peripheral side. The second inner peripheral surface 32 contacts with the inner-peripheral-side member. The seal lip 20 and the electroconductive lip 30 are spaced from each other in a direction of the axis, at least at the seal portion 21 and the contact point portion 31.

## Description

### FIELD

The present disclosure relates to a sealing device, and more particularly relates to a sealing device used in or near a motor.

### BACKGROUND

Motorization of automobiles has been advanced in recent years. Development of hybrid vehicles and electrically-driven automobiles such as electric automobiles and fuel cell automobiles has been advanced in recent years. The hybrid vehicles and the electrically-driven automobiles each use a drive motor as a power source. The drive motor generates inductive current. The inductive current causes electromagnetic noise, and thus, can influence electronic devices in the vehicle.

For this reason, a conduction path for grounding is formed between a housing and a shaft that is driven via an electroconductive metal brush. Such a technique is known (e.g., Japanese patent application laid-open publication No. 2015-207534). Thereby, leak current from a motor, which causes noise, is discharged to the housing via the conduction path by the metal brush.

However, in the case of using such a metal brush, an installation space for the metal brush needs to be secured in addition to an installation space for a seal member. Further, additional cost is required.

In regard to this, a sealing member itself of an oil seal that seals a gap between a penetration hole of a housing of an electric motor provided in a vehicle body and a rotational shaft of the electric motor is formed of electroconductive rubber. Such a technique is known (e.g., Japanese patent application laid-open publication No. 2015-207534). Thereby, the housing and the rotational shaft are electrically connected to each other via the electroconductive rubber. Thus, electromagnetic noise induced in the rotational shaft is released to the housing made of metal. Thereby, space saving and cost reduction can be achieved. Another known sealing device includes a sealing member made of electroconductive rubber in order to suppress generation of noise based on static electricity (e.g., Japanese patent application laid-open publication No. 2015-014296).

### BRIEF SUMMARY

### TECHNICAL PROBLEM

The sealing member made of electroconductive rubber can achieve space saving and cost reduction. However, the seal member is in contact with the shaft that rotates at a high speed. This causes heat generation (sliding heat generation) that can deteriorate the seal member. As a result, sealing performance can decline. Further, electroconductive performance can decline. Thus, a sealing member having electroconductivity for suppressing electromagnetic noise needs to be prevented from being deteriorated by heat generation.

An object of the present disclosure is to provide a sealing device that can prevent deterioration caused by heat generation.

### SOLUTION TO PROBLEM

According to one standpoint of the present disclosure, a sealing device for sealing an annular space between an inner-peripheral-side member and an outer-peripheral-side member, the sealing device includes:
a retaining ring made of metal and having an annular shape around an axis;
a seal lip having an annular shape around the axis and fixed, on an outer peripheral side, to the retaining ring, the seal lip including a seal portion extending obliquely relative to the axis, the seal lip forming an end portion on an inner peripheral side, and the seal lip including a first inner peripheral surface on an inner peripheral side, the first inner peripheral surface contacting with the inner-peripheral-side member; and
an electroconductive lip having electroconductivity, having an annular shape around the axis, and fixed, on an outer peripheral side, to the retaining ring, the electroconductive lip including a contact point portion extending obliquely relative to the axis, the electroconductive lip forming an end portion on an inner peripheral side, and the electroconductive lip including a second inner peripheral surface on an inner peripheral side, the second inner peripheral surface contacting with the inner-peripheral-side member,
wherein the seal lip and the electroconductive lip are spaced from each other in a direction of the axis, at least at the seal portion and the contact point portion..

### ADVANTAGEOUS EFFECTS

According to the sealing device of the present disclosure, deterioration caused by heat generation can be prevented.

### BRIEF DESCRIPTION OF DRAWINGS

FIG. 1 is a sectional view, along an axis, illustrating a schematic configuration of a sealing device according to an embodiment.
FIG. 2 is a partial enlarged sectional view of an upper side in the section in FIG. 1.
FIG. 3 is a sectional view partially illustrating a seal lip of the sealing device according to the embodiment.
FIG. 4 is a front view of the seal lip of the sealing device according to the embodiment.
FIG. 5 is a partial enlarged sectional view illustrating a use state of the sealing device according to the embodiment.

### DETAILED DESCRIPTION

The following describes an embodiment with reference to the drawings.

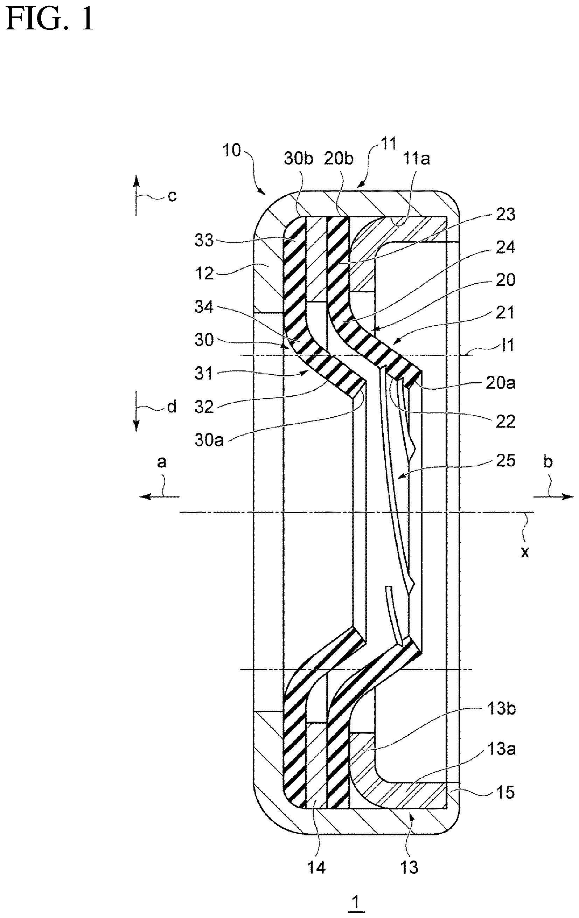

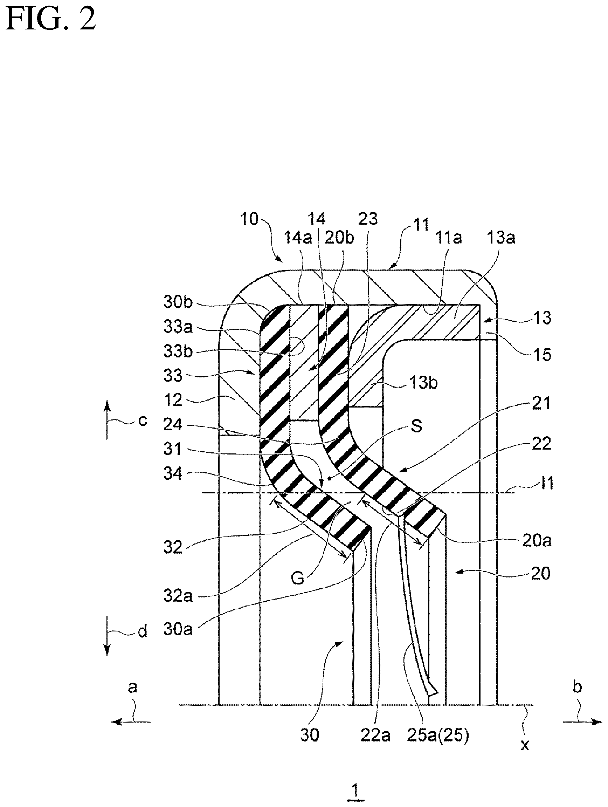

FIG. 1 illustrates a schematic configuration of a sealing device 1 according to an embodiment. FIG. 1 is a sectional view along an axis x. FIG. 2 is a partial enlarged sectional view of an upper side in the section of the sealing device 1 in FIG. 1. Hereinafter, for convenience of description, a direction of the arrow a in the axis x is defined as an outer side, and a direction of the arrow b in the axis x is defined as an inner side. Specifically, an inner side is an inner space side of a member to which the sealing device 1 is attached, and is a space side (sealing target side) on which a sealing target such as a lubricant exists. An outer side is a side opposite to a sealing target side, is a side to which a sealing target is prevented from leaking, and is an atmosphere side. In a direction (hereinafter, referred to also as "radial direction") perpendicular to the axis x, a side of a direction (the direction of the arrow c in FIG. 1 and FIG. 2) away from the axis x is defined as an outer peripheral side, and a side of a direction (the direction of arrow d in FIG. 1 and FIG. 2) of approaching the axis x is defined as an inner peripheral side.

The sealing device 1 according to the embodiment seals an annular space between an inner-peripheral-side member and an outer-peripheral-side member. The sealing device 1 is attached at the annular space in a use state as described below. The inner-peripheral-side member is, for example, an output shaft of an electric motor. The outer-peripheral-side member is, for example, a housing of the electric motor. The housing includes a penetration hole through which the output shaft of the electric motor penetrates. The inner-peripheral-side member is not limited to a member that rotates around the axis x, and may be a member that reciprocates along the axis x.

As illustrated in FIG. 1, the sealing device 1 includes a retaining ring 10, a seal lip 20, and an electroconductive lip 30. The retaining ring 10 is made of metal. The retaining ring 10 has an annular shape around the axis x. The seal lip 20 has an annular shape around the axis x. The electroconductive lip 30 has electroconductivity. The electroconductive lip 30 has an annular shape around the axis x. The seal lip 20 and the electroconductive lip 30 are fixed to the retaining ring 10, on an outer peripheral side.

The seal lip 20 includes a seal portion 21. The seal portion 21 extends obliquely relative to the axis x. The seal portion 21 includes an end portion (inner peripheral end portion 20a) on an inner peripheral side. The electroconductive lip 30 includes a contact point portion 31. The contact point portion 31 extends obliquely relative to the axis x. The contact point portion 31 includes an end portion (inner peripheral end portion 30a) on an inner peripheral side. The seal lip 20 and the electroconductive lip 30 are spaced from each other in the direction of the axis x, at least at the seal portion 21 and the contact point portion 31. The seal lip 20 includes an inner peripheral surface 22 facing an inner peripheral side of the seal portion 21. The inner peripheral surface 22 contacts with the inner-peripheral-side member. The electroconductive lip 30 includes an inner peripheral surface 32 facing an inner peripheral side of the contact point portion 31. The inner peripheral surface 32 contacts with the inner-peripheral-side member.

The retaining ring 10 includes a reception portion against which the seal lip 20 or the electroconductive lip 30 is pressed in the direction of the axis x, as illustrated in FIG. 1 and FIG. 2. The seal lip 20 and the electroconductive lip 30 are pressed against the retaining ring 10 in the direction of the axis x. Thereby, the seal lip 20 and the electroconductive lip 30 are retained by the retaining ring 10.

The retaining ring 10 is made of metal. The retaining ring 10 has an annular shape around the axis x. A section of the retaining ring 10 along the axis x (hereinafter, simply referred to also as "section") is L-shaped. The retaining ring 10 includes a cylindrical portion 11 and a disk portion 12, for example. The cylindrical portion 11 has a cylindrical shape extending in the direction of the axis x. The disk portion 12 has a hollow disk shape extending from an end portion on an outer side (a side of the direction of the arrow a) in the cylindrical portion 11 to an inner peripheral side (the direction of the arrow d). The disk portion 12 serves as the reception portion. The cylindrical portion 11 is formed in such a way as to be enabled to be fitted and fixed to an inner peripheral surface of the penetration hole formed in the outer-peripheral-side member, in a use state, as described below.

The seal lip 20 has an annular shape around the axis x, as illustrated in FIG. 1 and FIG. 2. The seal lip 20 is formed of an elastic material. A sectional shape of the seal lip 20 has the same thickness along the extending direction between an inner peripheral side and an outer peripheral side.

The seal lip 20 includes the seal portion 21, a fixed portion 23, and a connection portion 24. The seal portion 21 is a portion on an inner peripheral side in the seal lip 20. The fixed portion 23 is positioned on an outer peripheral side of the seal portion 21. The fixed portion 23 extends in the radial direction, and includes an end portion (outer peripheral end portion 20b) on an outer peripheral side. The fixed portion 23 is connected to the seal portion 21 via the connection portion 24. The connection portion 24 connects the seal portion 21 and the fixed portion 23 to each other.

The seal portion 21 extends obliquely relative to the axis x in such a way as to increase in a diameter as a position is shifted to an outer side (the direction of the arrow a) in the direction of the axis x. The seal portion 21 has the same thickness along the extending direction. The thickness is a width in the direction perpendicular to the extending direction, in the section.

Specifically, the seal portion 21 has a truncated hollow cone shape around the axis x. The fixed portion 23 extends parallel to the radial direction. The fixed portion 23 has the same thickness along the extending direction. The connection portion 24 extends, curved convexly to an outer side, in such a way that the seal portion 21 is positioned on an inner side of the fixed portion 23. The connection portion 24 has the same thickness along the extending direction.

In a use state, the inner peripheral surface 22 of the seal portion 21 contacts with the inner-peripheral-side member. For example, a contact portion 22a on an inner peripheral side of the imaginary line (11) illustrated in FIG. 1 and FIG. 2 contacts with the inner-peripheral-side member. The imaginary line (11) indicates an outer peripheral surface of the inner-peripheral-side member in a use state. The contact portion 22a forms an annular surface having a width from the inner peripheral end portion 20a in the extending direction of the seal portion 21.

The fixed portion 23 receives force applied to an outer side in the direction of the axis x. Specifically, the fixed portion 23 has a hollow disk shape around the axis x. The fixed portion 23 has a radial-direction length corresponding to the disk portion 12 of the retaining ring 10, as illustrated in FIG. 1 and FIG. 2. For example, the fixed portion 23 has a radial-direction length slightly shorter than a radial-direction length of the disk portion 12 of the retaining ring 10. The fixed portion 23 has a radial-direction length corresponding to the below-described fixed portion 33 of the electroconductive lip 30, as illustrated in FIG. 1 and FIG. 2. For example, the fixed portion 23 has a radial-direction length slightly shorter than a radial-direction length of the fixed portion 33 of the electroconductive lip 30.

The fixed portion 23 contacts, at the outer peripheral end portion 20b, with an inner peripheral surface 11a of the cylindrical portion 11. The fixed portion 23 does not need to contact, at the outer peripheral end portion 20b, with the inner peripheral surface 11a of the cylindrical portion 11.

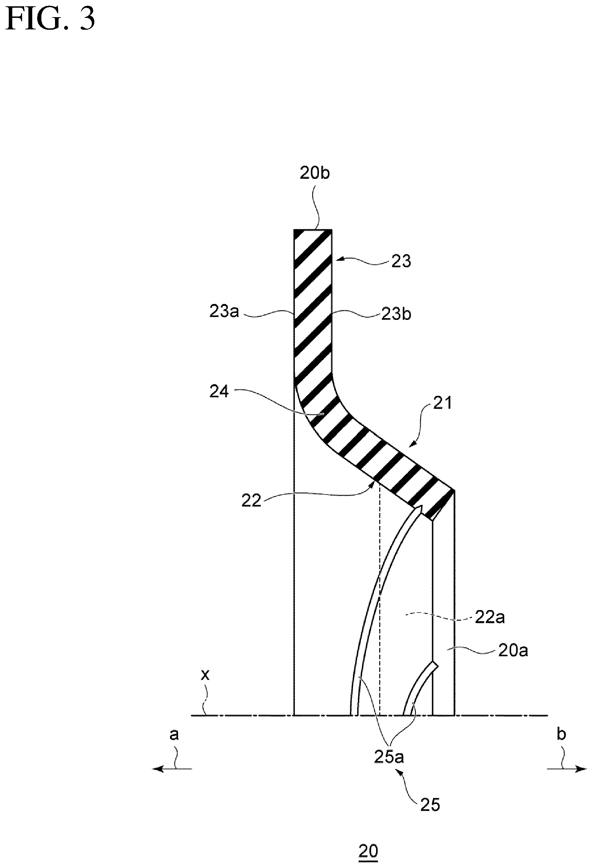

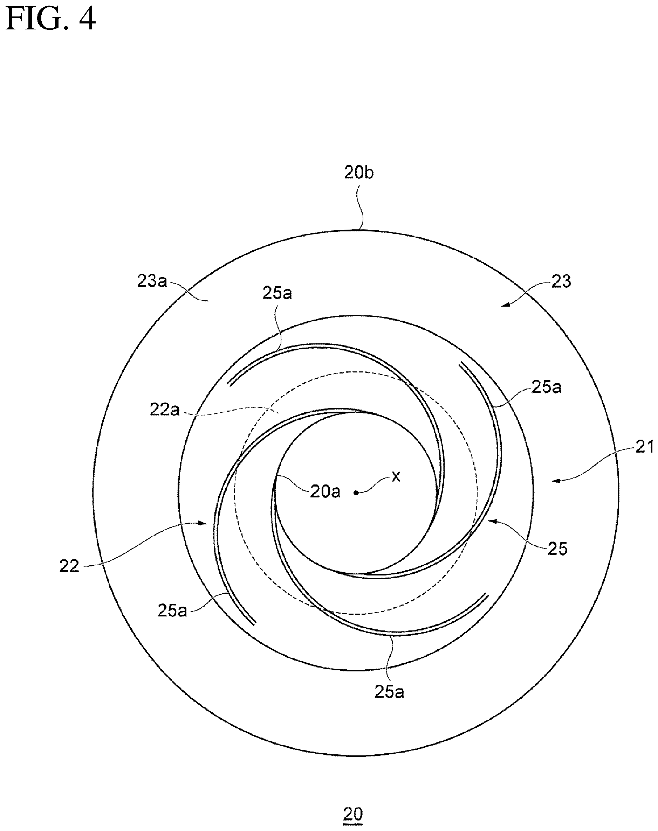

A thread groove 25 is formed in the seal lip 20 as illustrated in FIG. 3 and FIG. 4. The thread groove 25 forms a gas flow from an outer side of the seal lip 20 to an inner side thereof, accompanying rotation of the inner-peripheral-side member in a use state. This generates an effect of pumping from an outer side of the seal lip 20 to an inner side thereof. The thread groove 25 is constituted by four grooves 25a, for example, in such a way as to form a four-start thread. The groove 25a is recessed inside from the surface of the seal lip 20. The groove 25a extends in a direction corresponding to a rotational direction of the inner-peripheral-side member.

The thread groove 25 is not limited to one that forms a four-start thread, and the number of grooves forming the thread groove 25 is not limited to four. The thread groove 25 may generate the pumping effect. For example, the thread groove 25 may be constituted by one groove 25a that forms a one-start thread, or may be constituted by multiple grooves 25a that form a different multiple-start thread.

The thread groove 25 is formed in the inner peripheral surface 22 of the seal portion 21. Each of the grooves 25a intersects the contact portion 22a, from an outer side of the contact portion 22a, and reaches the inner peripheral end portion 20a. The position of the thread groove 25 is not limited to this. For example, each of the grooves 25a does not need to reach the inner peripheral end portion 20a. Each of the grooves 25a may be formed only on an outer side of the contact portion 22a of the inner peripheral surface 22, and does not need to reach the contact portion 22a. The seal lip 20 does not need to include the thread groove 25.

The electroconductive lip 30 has an annular shape around the axis x, as illustrated in FIG. 1 and FIG. 2. The electroconductive lip 30 is formed of a material having electroconductivity. The electroconductive lip 30 has a shape similar to that of the seal lip 20. A sectional shape of the electroconductive lip 30 has the same thickness along the extending direction between an inner peripheral side and an outer peripheral side.

The electroconductive lip 30 includes the contact point portion 31, the fixed portion 33, and a connection portion 34. The contact point portion 31 is a portion on an inner peripheral side in the electroconductive lip 30. The fixed portion 33 is positioned on an outer peripheral side of the contact point portion 31. The fixed portion 33 extends in the radial direction, and includes an end portion (outer peripheral end portion 30b) on an outer peripheral side. The fixed portion 33 is connected to the contact point portion 31 via the connection portion 34. The connection portion 34 connects the contact point portion 31 and the fixed portion 33 to each other.

The contact point portion 31 extends obliquely relative to the axis x in such a way as to increase in a diameter as a position is shifted to an outer side (the direction of the arrow a) in the direction of the axis x. The contact point portion 31 has the same thickness along the extending direction. The thickness is a width in the direction perpendicular to the extending direction, in the section.

Specifically, the contact point portion 31 has a truncated hollow cone shape around the axis x. The fixed portion 33 extends parallel to the radial direction. The fixed portion 33 has the same thickness along the extending direction. The connection portion 34 extends, curved convexly to an outer side, in such a way that the contact point portion 31 is positioned on an inner side of the fixed portion 33. The connection portion 34 has the same thickness along the extending direction.

In a use state, the inner peripheral surface 32 of the contact point portion 31 contacts with the inner-peripheral-side member. For example, a contact portion 32a on an inner peripheral side of the imaginary line (11) illustrated in FIG. 1 and FIG. 2 contacts with the inner-peripheral-side member. The imaginary line (11) indicates the outer peripheral surface of the inner-peripheral-side member in a use state. The contact portion 32a forms an annular surface having a width from the inner peripheral end portion 30a in the extending direction of the contact point portion 31.

The fixed portion 33 receives force applied to an outer side in the direction of the axis x. The fixed portion 33 is pressed against the disk portion 12 of the retaining ring 10 to an outer side in the direction of the axis x. The fixed portion 33 has a radial-direction length corresponding to the disk portion 12 of the retaining ring 10, as illustrated in FIG. 1 and FIG. 2. For example, the fixed portion 33 has a radial-direction length slightly longer than a radial-direction length of the disk portion 12 of the retaining ring 10.

The fixed portion 33 contacts, at the outer peripheral end portion 30b, with the inner peripheral surface 11a of the cylindrical portion 11. The fixed portion 33 does not need to contact, at the outer peripheral end portion 30b, with the inner peripheral surface 11a of the cylindrical portion 11.

A shape of the electroconductive lip 30 is similar to a shape of the seal lip 20, as illustrated in FIG. 1 and FIG. 2. In FIG. 1 and FIG. 2, a width of the contact portion 32a of the contact point portion 31 is larger than a width of the contact portion 22a of the seal portion 21. An interference of the electroconductive lip 30 is larger than an interference of the seal lip 20. However, a relation between an interference of the seal lip 20 and an interference of the electroconductive lip 30 is not limited to this.

The seal lip 20 and the electroconductive lip 30 are fixed to the retaining ring 10 on an outer peripheral side. For example, the sealing device 1 includes a pressing ring 13. The pressing ring 13 fixes the seal lip 20 and the electroconductive lip 30 to the retaining ring 10. The pressing ring 13 has an annular shape around the axis x. The pressing ring 13 can be fitted into and fixed to the retaining ring 10. The pressing ring 13 presses the seal lip 20 and the electroconductive lip 30 to an outer side in the direction of the axis x.

The pressing ring 13 has, for example, an annular shape around the axis x, as illustrated in FIG. 1 and FIG. 2. The pressing ring 13 has an L-shaped section. The pressing ring 13 includes a cylindrical portion 13a and a pressing portion 13b. The cylindrical portion 13a has a cylindrical shape extending in the direction of the axis x. The pressing portion 13b has a hollow disk shape, and extends from an end portion on an outer side in the cylindrical portion 13a to an inner peripheral side. The cylindrical portion 13a is fitted into an inner peripheral side of the cylindrical portion 11 of the retaining ring 10 and fixed thereto. The pressing portion 13b contacts with the fixed portion 23 of the seal lip 20 from an inner side in the direction of the axis x.

The sealing device 1 includes a spacer 14. The spacer 14 makes an interval between the seal lip 20 and the electroconductive lip 30 in the direction of the axis x, at a part where the seal lip 20 and the electroconductive lip 30 are fixed to the retaining ring 10. The spacer 14 is made of metal. The spacer 14 has an annular shape around the axis x. For example, the spacer 14 has a hollow disk shape around the axis x. The spacer 14 has a sectional shape extending parallel to the radial direction, as illustrated in FIG. 1 and FIG. 2. The spacer 14 has a thickness constant along the extending direction.

The spacer 14 has a radial-direction length corresponding to the fixed portion 23 of the seal lip 20 and the fixed portion 33 of the electroconductive lip 30, as illustrated in FIG. 1 and FIG. 2. For example, the spacer 14 has a radial-direction length equivalent to a radial-direction length of the fixed portion 23 of the seal lip 20. Thus, the spacer 14 is sandwiched between the fixed portion 23 of the seal lip 20 and the fixed portion 33 of the electroconductive lip 30 in the direction of the axis x. The spacer 14 contacts, at an outer peripheral end portion 14a, with the inner peripheral surface 11a of the cylindrical portion 11. The spacer 14 does not need to contact, at the outer peripheral end portion 14a, with the inner peripheral surface 11a of the cylindrical portion 11.

The seal lip 20 and the electroconductive lip 30 are sandwiched between the disk portion 12 of the retaining ring 10 and the pressing portion 13b of the pressing ring 13 in the direction of the axis x, as illustrated in FIG. 1 and FIG. 2. The seal lip 20 and the electroconductive lip 30 are thus fixed to the retaining ring 10. The pressing ring 13 is press-fitted into and fixed to the cylindrical portion 11 of the retaining ring 10.

The spacer 14 is sandwiched between the seal lip 20 and the electroconductive lip 30. Thereby, the seal lip 20 and the electroconductive lip 30 are separated from each other in the direction of the axis x, and a space S is formed between the seal lip 20 and the electroconductive lip 30. Specifically, the fixed portion 23 of the seal lip 20 is pressed to an outer side in the direction of the axis x by the pressing portion 13b of the pressing ring 13. The fixed portion 33 of the electroconductive lip 30 is pressed to an outer side in the direction of the axis x by the fixed portion 23 of the seal lip 20 via the spacer 14. The fixed portion 33 of the electroconductive lip 30 is pressed against the disk portion 12 of the retaining ring 10 to an outer side in the direction of the axis x. Thereby, the seal lip 20 and the electroconductive lip 30 are sandwiched between the retaining ring 10 and the pressing ring 13 and fixed to the retaining ring 10, at the fixed portions 23 and 33, respectively. Thus, the seal lip 20 and the electroconductive lip 30 are fixed to the retaining ring 10 without using an adhesive.

The outer peripheral end portion 20b of the seal lip 20, the outer peripheral end portion 30b of the electroconductive lip 30, and the outer peripheral end portion 14a of the spacer 14 contact with the cylindrical portion 11 of the retaining ring 10. The outer peripheral end portion 20b of the seal lip 20 does not need to contact with the cylindrical portion 11 of the retaining ring 10. The outer peripheral end portion 30b of the electroconductive lip 30 does not need to contact with the cylindrical portion 11 of the retaining ring 10. The outer peripheral end portion 14a of the spacer 14 does not need to contact with the cylindrical portion 11 of the retaining ring 10.

The retaining ring 10 may include a support portion 15 as illustrated in FIG. 1 and FIG. 2. The support portion 15 fixes the pressing ring 13 to the retaining ring 10, in a state where the pressing ring 13 is fitted into the cylindrical portion 11 of the retaining ring 10, and the seal lip 20, the electroconductive lip 30, and the spacer 14 are sandwiched and retained between the pressing ring 13 and the disk portion 12 of the retaining ring 10. The support portion 15 protrudes from an end portion on an inner side in the cylindrical portion 11 to an inner peripheral side. The support portion 15 has an annular shape. The support portion 15 contacts, from an inner side, with an end portion on an inner side in the cylindrical portion 13a of the pressing ring 13. For example, the support portion 15 is formed by deforming the end portion on an inner side in the cylindrical portion 11 to an inner peripheral side.

The spacer 14 is sandwiched between the fixed portion 23 of the seal lip 20 and the fixed portion 33 of the electroconductive lip 30, as described above. The seal lip 20 and the electroconductive lip 30 have the shapes similar to each other. For this reason, the space S between the seal lip 20 and the electroconductive lip 30 has a width constant along the extending direction between an inner peripheral side and an outer peripheral side. The space S makes an interval in such a way that the seal portion 21 of the seal lip 20 and the contact point portion 31 of the electroconductive lip 30 do not overlap with each other in the radial direction in a use state. Electroconductive grease G may be provided in the space S. The electroconductive grease G may fill the entire space S, or may be provided in a part of the space S.

The seal lip 20 is formed of either PTFE or rubber, for example. The electroconductive lip 30 is formed of a material having electroconductivity. For example, the electroconductive lip 30 is formed of electroconductive PTFE, electroconductive fabric, and electroconductive rubber.

The retaining ring 10 can be fitted into an annular gap between the outer-peripheral-side member as an attachment target and the inner-peripheral-side member, as described above. The seal lip 20 can contact with the inner-peripheral-side member. For this reason, a sealing target can be prevented from leaking to an outer side, and foreign matter such as sand, muddy water, and dust can be prevented from entering from an atmosphere side

The electroconductive lip 30 having electroconductivity can contact with the inner-peripheral-side member. The electroconductive lip 30 contacts with the retaining ring 10 made of metal and attached to the outer-peripheral-side member. Thus, the sealing device 1 forms an electroconductive path between the inner-peripheral-side member and the outer-peripheral-side member.

An outer-side surface 33a of the fixed portion 33 of the electroconductive lip 30 can contact with the disk portion 12 of the retaining ring 10. The outer peripheral end portion 30b of the electroconductive lip 30 contacts with the cylindrical portion 11 of the retaining ring 10. Thus, a contact area between the electroconductive lip 30 and the retaining ring 10 is increased so that electroconductivity of the electroconductive path between the inner-peripheral-side member and the outer-peripheral-side member is enhanced.

The spacer 14 made of metal contacts with an inner-side surface 33b of the fixed portion 33 of the electroconductive lip 30. The spacer 14 contacts with the cylindrical portion 11 of the retaining ring 10. Thus, a contact area between the electroconductive lip 30 and the retaining ring 10 is increased so that electroconductivity of the electroconductive path between the inner-peripheral-side member and the outer-peripheral-side member is enhanced. The electroconductive lip 30, the retaining ring 10, and the spacer 14 are fixed to each other without using an adhesive. For this reason, a decrease in the contact area between the electroconductive lip 30 and the retaining ring 10 is suppressed so that electroconductivity of the electroconductive path between the inner-peripheral-side member and the outer-peripheral-side member is enhanced.

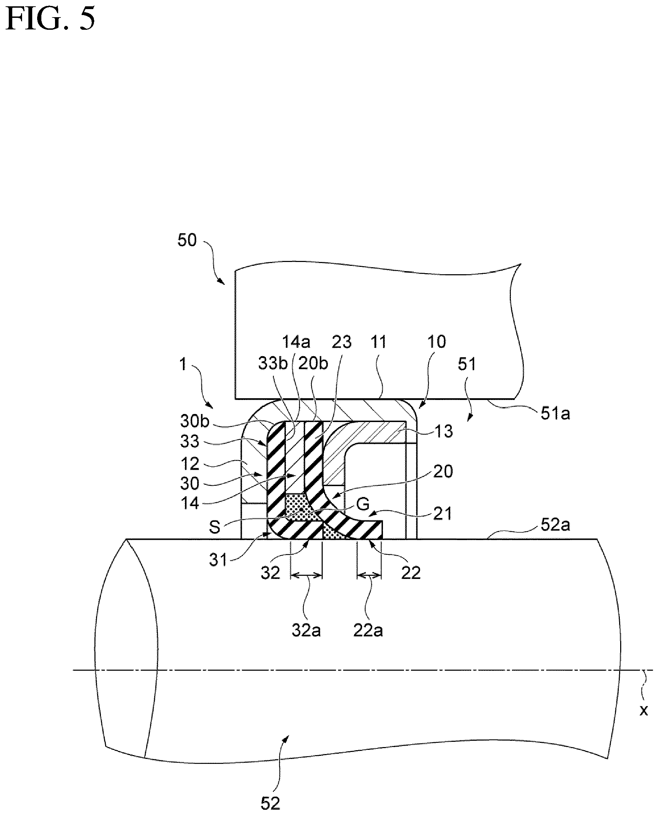

Next, an effect of the sealing device 1 is described. FIG. 5 is a partial enlarged sectional view of the sealing device 1 in a use state. The housing 50 as the attachment target includes a shaft hole 51 as the penetration hole. A shaft 52 is inserted into the shaft hole 51. In a use state, the sealing device 1 is attached to the shaft 52. The housing 50 is a housing of an electric motor, for example. The shaft 52 is an output shaft of the electric motor, for example.

The sealing device 1 is press-fitted into the shaft hole 51 and thus fitted and attached therein in a use state of the sealing device 1, as illustrated in FIG. 5. Thus, the sealing device 1 is fixed to the housing 50. More specifically, the retaining ring 10 is press-fitted into the shaft hole 51. The cylindrical portion 11 of the retaining ring 10 closely contacts with an inner peripheral surface 51a of the shaft hole 51. Thereby, a gap between the sealing device 1 and the shaft hole 51 is sealed. The sealing device 1 is aligned axially with the shaft hole 51 by press-fitting the retaining ring 10 into the shaft hole 51.

The inner peripheral surface 22 of the seal portion 21 contacts with an outer peripheral surface 52a of the shaft 52 in such a way as to be elastically deformed, in a use state of the sealing device 1. Then, the contact portion 22a of the inner peripheral surface 22 contacts with the outer peripheral surface 52a of the shaft 52.

Thus, the seal lip 20 contacts with the outer peripheral surface 52a of the shaft 52 in such a way that the shaft 52 is slidable, in a use state of the sealing device 1. Thereby, the seal lip 20 prevents a sealing target such as lubricating oil from leaking out beyond the seal lip 20 to an outer side from a side of the sealing target. Further, the seal lip 20 prevents foreign matter from entering an inside from an outside.

The seal lip 20 contacts with the outer peripheral surface 52a of the shaft 52, at the contact portion 22a having a certain width in the direction of the axis x. For this reason, sliding resistance between the seal lip 20 and the shaft 52 is reduced. Thus, heat generation of the sliding between the seal lip 20 and the shaft 52 is suppressed so that a generated heat amount is reduced. Thereby, the seal lip 20 is prevented from being deteriorated by the sliding heat generation, and thus, sealing performance can be prevented from declining.

The thread groove 25 that exerts the pumping effect is formed in the seal lip 20. For this reason, even when a sealing target is oozed beyond the seal lip 20 from an inside of the housing 50 to an outside thereof, the oozed sealing target can be returned from an outside of the housing 50 to an inside thereof. Thus, the sealing performance of the sealing device 1 can be improved also by the pumping effect. The pumping effect causes a layer of the sealing target to be formed between the contact portion 22a of the seal lip 20 and the outer peripheral surface 52a of the shaft 52. Thereby, sliding resistance between the seal lip 20 and the shaft 52 is reduced, and sliding heat generation can be suppressed. According to the sealing device 1, heat generation of sliding between the seal lip 20 and the shaft 52 can be suppressed also by the effect of the thread groove 25. Thereby, the seal lip 20 can be prevented from being deteriorated by the sliding heat generation, and sealing performance can be prevented from declining.

When the seal lip 20 is formed of PTFE, heat resistance of the seal lip 20 is enhanced. Further, a friction coefficient of the seal lip 20 is reduced, and the sliding resistance is reduced. Thus, the sliding heat generation is suppressed, the seal lip 20 is prevented from being deteriorated by the sliding heat generation, and sealing performance can be prevented from declining.

The inner peripheral surface 32 of the contact point portion 31 contacts with the outer peripheral surface 52a of the shaft 52 in such a way as to be elastically deformed, in a use state of the sealing device 1. Then, the contact portion 32a of the inner peripheral surface 32 contacts with the outer peripheral surface 52a of the shaft 52.

Thus, the electroconductive lip 30 contacts with the outer peripheral surface 52a of the shaft 52 in such a way that the shaft 52 is slidable, in a use state of the sealing device 1. The retaining ring 10 contacts with the housing 50. The sealing device 1 forms the electroconductive path between the shaft 52 and the housing 50. Thereby, leak current generated in the electric motor is discharged from the shaft 52 to the housing 50 via the electroconductive path. Thereby, noise based on the leak current can be prevented from being generated.

The electroconductive lip 30 contacts with the outer peripheral surface 52a of the shaft 52, at the contact portion 32a having a certain width in the direction of the axis x. For this reason, sliding resistance between the electroconductive lip 30 and the shaft 52 is reduced. Thus, heat generation of the sliding between the electroconductive lip 30 and the shaft 52 is suppressed so that a generated heat amount is reduced. Thereby, the electroconductive lip 30 is prevented from being deteriorated by the sliding heat generation, and thus, electroconductivity can be prevented from declining. The electroconductive lip 30 contacts with the outer peripheral surface 52a of the shaft 52, at the contact portion 32a having a certain width in the direction of the axis x. For this reason, a sectional area of the electroconductive path is increased so that electroconductivity between the electroconductive lip 30 and the shaft 52 is enhanced.

When the electroconductive lip 30 is made of electroconductive PTFE, heat resistance of the electroconductive lip 30 is enhanced. Further, a friction coefficient of the electroconductive lip 30 is reduced, and the sliding resistance is reduced. Thus, the sliding heat generation is suppressed, the electroconductive lip 30 is prevented from being deteriorated by the sliding heat generation, and electroconductivity can be prevented from declining.

The electroconductive lip 30 functions as a seal similarly to the seal lip 20. The electroconductive lip 30 functions as the seal that prevents the deterioration caused by sliding heat generation. Thus, sealing performance of the sealing device 1 is enhanced. When the electroconductive lip 30 is made of electroconductive PTFE, the electroconductive lip 30 can be prevented from being deteriorated by sliding heat generation in regard to the sealing performance, and sealing performance of the electroconductive lip 30 can be prevented from declining.

The outer peripheral end portion 30b of the electroconductive lip 30 contacts with the cylindrical portion 11 of the retaining ring 10. The spacer 14 made of metal contacts with the inner-side surface 33b of the fixed portion 33. The spacer 14 contacts with the cylindrical portion 11 of the retaining ring 10. Thus, a sectional area of an electroconductive path between the electroconductive lip 30 and the retaining ring 10 is increased. The electroconductive lip 30, the retaining ring 10, and the spacer 14 are fixed to each other without using an adhesive. Thus, the sectional area of the electroconductive path between the electroconductive lip 30 and the retaining ring 10 is prevented from decreasing. Thereby, electroconductivity of an electroconductive path between the shaft 52 and the housing 50 can be enhanced.

The electroconductive grease G is provided in the space S between the seal lip 20 and the electroconductive lip 30 facing each other in the direction of the axis x. For this reason, a sectional area of the electroconductive path of the sealing device 1 is increased, and electroconductivity of the electroconductive path between the shaft 52 and the housing 50 is increased. A part of the space S is sandwiched between the contact portion 31 of the electroconductive lip 30 and the seal portion 21 of the seal lip 20 in the radial direction. For this reason, the electroconductive grease G is easily retained in the space S. Thus, the electroconductive grease G works for a long time.

The seal lip 20 and the electroconductive lip 30 have shapes similar to each other, and face each other in the direction of the axis x. Thus, a size of the sealing device 1 is reduced, and an attachment space for the sealing device 1 can be reduced.

The seal lip 20 and the electroconductive lip 30 are members distinct from each other. Thus, the sealing performance and the electroconductivity are improved, and sliding heat generation can be effectively suppressed in order to prevent deterioration of the sealing performance and the electroconductivity. The seal lip 20 is provided on a side of a sealing target, and the electroconductive lip 30 is provided on an atmosphere side. Thereby, the sealing performance and the electroconductivity are improved.

According to the sealing device 1 of the present embodiment, deterioration caused by heat generation can be prevented. Thereby, deterioration of the sealing performance can be prevented. Further, a decline in the electroconductivity is prevented, and a decline in an effect of suppressing electromagnetic noise can be prevented.

Although the sealing device 1 according to the embodiment is described above, the sealing device according to the present disclosure is not limited to the above-described sealing device 1, and includes all aspects encompassed in a concept of the present disclosure and claims. The respective configurations may be combined appropriately and selectively in such a way as to solve or achieve at least a part of the above-described problems and advantageous effects. For example, a shape, a material, arrangement, a size, and the like of each of the constituent elements in the above-described embodiment can be modified appropriately depending on a specific use aspect of the present disclosure.

For example, the seal portion 21 of the seal lip 20 and the contact point portion 31 of the electroconductive lip 30 obliquely extend in the same direction in the sealing device 1 according to the embodiment, but may obliquely extend in different directions. The seal lip 20 may be provided on an atmosphere side, and the electroconductive lip 30 may be provided on a side of a sealing target.

The sealing device 1 according to the embodiment includes the spacer 14 as a member distinct from the seal lip 20 and the electroconductive lip 30. However, the seal lip 20 or the electroconductive lip 30 may integrally form the spacer 14 at the fixed portion 23 or 33. For example, the fixed portion 33 of the electroconductive lip 30 may include a portion having a shape similar to that of the spacer 14.

### Reference Signs List

- 1: Sealing device
- 10: Retaining ring
- 11: Cylindrical portion
- 11a: Inner peripheral surface
- 12: Disk portion
- 13: Pressing ring
- 13a: Cylindrical portion
- 13b: Pressing portion
- 14: Spacer
- 14a: Outer peripheral end portion
- 15: Support portion
- 20: Seal lip
- 20a: Inner peripheral end portion
- 20b: Outer peripheral end portion
- 21: Seal portion
- 22: Inner peripheral surface (first inner peripheral surface)
- 22a: Contact portion
- 23: Fixed portion
- 24: Connection portion
- 25: Thread groove
- 25a: Groove
- 30: Electroconductive lip
- 30a: Inner peripheral end portion
- 30b: Outer peripheral end portion
- 31: Contact point portion
- 32: Inner peripheral surface (second inner peripheral surface)
- 32a: Contact portion
- 33: Fixed portion
- 33a: Outer-side surface
- 33b: Inner-side surface
- 34: Connection portion
- 50: Housing
- 51: Shaft hole
- 51a: Inner peripheral surface
- 52: Shaft
- 52a: Outer peripheral surface
- G: Grease
- S: Space
- x: Axis

## Claims

1. A sealing device for sealing an annular space between an inner-peripheral-side member and an outer-peripheral-side member, the sealing device comprising:
a retaining ring made of metal and having an annular shape around an axis;
a seal lip having an annular shape around the axis and fixed, on an outer peripheral side, to the retaining ring, the seal lip including a seal portion extending obliquely relative to the axis, the seal lip forming an end portion on an inner peripheral side, and the seal lip including a first inner peripheral surface on an inner peripheral side, the first inner peripheral surface contacting with the inner-peripheral-side member; and
an electroconductive lip having electroconductivity, having an annular shape around the axis, and fixed, on an outer peripheral side, to the retaining ring, the electroconductive lip including a contact point portion extending obliquely relative to the axis, the electroconductive lip forming an end portion on an inner peripheral side, and the electroconductive lip including a second inner peripheral surface on an inner peripheral side, the second inner peripheral surface contacting with the inner-peripheral-side member,
wherein the seal lip and the electroconductive lip are spaced from each other in a direction of the axis, at least at the seal portion and the contact point portion.

2. The sealing device according to claim 1,
wherein the seal lip is pressed against the retaining ring in the direction of the axis, and
the electroconductive lip is pressed against the retaining ring via the seal lip in the direction of the axis.

3. The sealing device according to claim 1 or 2,
wherein the seal lip includes a first fixed portion extending in a radial direction, connected on an outer peripheral side of the seal portion, and forming an end portion that is on an outer peripheral side and that is fixed to the retaining ring, and
the electroconductive lip includes a second fixed portion extending in the radial direction, connected on an outer peripheral side of the contact point portion, and forming an end portion that is on an outer peripheral side and that is fixed to the retaining ring.

4. The sealing device according to any one of claims 1 to 3, further comprising:
a spacer made of metal, having an annular shape around the axis, forming an interval between the seal lip and the electroconductive lip in the direction of the axis, and contacting with the retaining ring.

5. The sealing device according to any one of claims 1 to 4, further comprising:
electroconductive grease provided between the seal lip and the electroconductive lip.

6. The sealing device according to any one of claims 1 to 5,
wherein the seal portion and the contact point portion are inclined to a same side relative to the axis, and face each other in the direction of the axis.

7. The sealing device according to any one of claims 1 to 6,
wherein the seal portion includes a thread groove on the first inner peripheral surface.

8. The sealing device according to claim 7,
wherein the thread groove generates a gas flow from an outer side of the seal lip to an inner side of the seal lip, accompanying rotation of the inner-peripheral-side member.

9. The sealing device according to any one of claims 1 to 8,
wherein the seal lip is made of an elastic material.
